# EUROPEAN PATENT SPECIFICATION

(11) **EP 2 453 608 B1**
(45) Date of publication and mention of the grant of the patent: **07.01.2015**
(21) Application number: 10014546.5
(22) Date of filing: 12.11.2010
(51) Int. Cl.: H04L 12/04, H04L 29/06, H04W 8/20, H04W 12/04, H04W 12/06, H04W 88/06

(54) **Method and devices for accessing a wireless local area network**
Verfahren und Vorrichtungen zum Zugriff auf ein drahtloses, lokales Netzwerk
Procédé et dispositifs pour accéder à un réseau local sans fil

(43) Date of publication of application: 16.05.2012
(73) Proprietor: Deutsche Telekom AG, 53113 Bonn (DE)
(72) Inventor: Schatzmayr, Rainer, Dr., 53229 Bonn (DE)
(74) Representative: Schwöbel, Thilo K.

(56) References cited:
- WO-A1-03/092218
- WO-A1-2007/071009
- WO-A2-2010/132499
- US-A1- 2007 070 935

## Description

### BACKGROUND

The present invention relates to a method, a public land mobile network, a mobile terminal and a program for enabling a mobile terminal to have access to a wireless local area network via a first radio interface of the mobile terminal, wherein the wireless local area network requires at least one authentication information to grant access to the mobile terminal. The mobile terminal has access to a public land mobile network according to any standard, such as GERAN, UTRAN, LTE / E-UTRAN, LTE-Advanced, cdma2000, WiMAX, WiBro etc, and access to the wireless local area network is provided to the mobile terminal via the operator of the public land mobile network to which the mobile terminal is connected.

Access points of wireless local area networks are used to provide wireless connectivity to mobile terminals. There are so-called open (public) wireless local area networks (having associated access points) and so-called closed (private) wireless local area networks (having associated access points).

Related prior art documents include WO 2007/071009 A1, US 2007/070935 A1, and WO 03/092218 A1.

Document WO 2007/071009 A1 discloses a method and system for roaming between heterogeneous networks. The method involves authenticating a mobile communication device on a first network, providing the device with a single-use token that can be used to sign-on to a second network without requiring conventional re-authentication over the second network.

An open wireless local area network is usually provided in public environments like airports, restaurants, railway stations, etc. Its main characteristic is that it allows a mobile terminal to establish an unencrypted connection to the wireless local area network (or the access point of the wireless local area network). The access to specific services provided by the wireless local area network can be controlled by mechanisms that provide an authentication of the user trying to have access to the service. These mechanisms are usually based on credentials like a username and/or a password. Once the user (the mobile terminal) is authenticated, the corresponding mobile terminal is authorized to have access to the services of the wireless local area network. E.g., a user (a mobile terminal) can be authenticated in a public wireless local area network (for example in a hotel or the like) by entering a username and a password, and by providing a valid username and a valid corresponding password, internet connectivity services is provided.

A closed wireless local area network is usually deployed in a home or enterprise environment. In this case, the communication between the mobile terminal and the wireless local area network is usually encrypted, ensuring that other terminals cannot read the messages being exchanged between the mobile terminal and the wireless local area network (or the access point of the wireless local area network). The encryption is usually performed through the usage of encryption keys that have to be exchanged between the mobile terminal and the wireless local area network (or the access point of the wireless local area network). This is usually performed by the user that configures the WLAN interface of the mobile terminal by using the encryption keys used for the wireless local area network. Once the mobile terminal is able to establish an encrypted communication to the wireless local area network (or the access point of the wireless local area network), the mobile terminal can be authorized to access specific services. In many cases, such additional authorization is not performed and the use of the encryption is assumed to represent an authorization.

In case that an access of a mobile terminal to a wireless local area network (or the access point of the wireless local area network) is desired, there is the problem of how to transmit the credentials in a secure manner to the mobile terminal. This is especially true for a first time access of a specific mobile terminal to a specific wireless local area network (or the access point of the wireless local area network). Subsequent access is usually simpler as the mobile terminal can store the credentials locally. The delivery of credentials is usually performed by re-directing the user (of the mobile terminal) during the first access to the public wireless local area network (or the access point of the wireless local area network) to usually a HTTP page that provides the credentials (usually after entering either a credit card information or a voucher code). The credentials can also be provided to the user of the mobile terminal via an SMS after the user enters the required information to the HTTP page. Whichever way is chosen to deliver the credentials, an interaction of the user of the mobile terminal is required, at least when accessing a specific wireless local area network (or the access point of the wireless local area network) for the first time.

In case that a mobile terminal is to be connected to a private wireless local area network (or the access point of the wireless local area network), it exists the problem of how to provide the encryption keys in a secure manner to the mobile terminal. Encryption keys are usually valid in a single wireless local area network (or the access point of the wireless local area network) or restricted to an enterprise. It is possible to transmit such encryption keys, e.g., in writing and in a confidential manner. Once the user of the mobile terminal has received the encryption keys, a configuration has to occur in the WLAN interface of the mobile terminal.

Presently, several mechanisms have been proposed to facilitate the actions to be performed such that a mobile terminal is enabled to have access to a wireless local area network (or the access point of the wireless local area network). These mechanisms include solutions such as EAP-SIM (EAP for GSM Subscriber Identity) and EAP-AKA (Extensible Authentication Protocol for UMTS Authentication and Key Agreement). These mechanisms provide authentication functionality for mobile terminals based on mechanisms derived from Global System of Mobile Communication (GSM) / Universal Mobile Telecommunication System (UMTS) networks. The authentication algorithms of the public land mobile network are re-used to provide an authentication of the subscriber identity module (SIM) of the mobile terminal. The main problem with this solution is that it requires support for EAP-SIM / EAP-AKA in the wireless local area network (or the access point of the wireless local area network) and only works in wireless local area networks (or the access points of the wireless local area network) that are connected to the infrastructure of the operator of the public land mobile network to which the mobile terminal is connected. Additional methods comprise EAP-TLS (Extensible Authentication Protocol over Transport Layer Security) and similar EAP variants based on a certificate stored in the mobile terminal. These mechanisms require the existence of credentials on the mobile terminal and hence a challenge lies in questions where to store such credentials on the mobile terminal in a secure manner. With regard to closed wireless local area networks, a mechanism called WPS (Wireless Protected Setup) is presently known that provides a possibility to easily configure the encryption keys (like WPA (Wi-Fi Protected Access) keys or WPA2 keys) on the mobile terminal. The main drawback of this method is that WPS requires actions to be performed on the wireless local area network (or the access points of the wireless local area network) and on the mobile terminal simultaneously, like pressing a button at the same time, or entering specific keys in the access point of the wireless local area network. This becomes relatively cumbersome in a public wireless local area network environment.

### SUMMARY

In order to overcome the limitations of the conventional methods of enabling a mobile terminal to have access to a wireless local area network, the invention proposes to exchange data between a public land mobile network and the mobile terminal and to use these data enable the mobile terminal to have access to the wireless local area network in a convenient manner, i.e. preferably in an automatic manner without relying on an interaction with the user of the mobile terminal.

An object of the present invention is therefore to provide a method, a public land mobile network (PLMN), a mobile terminal, and a program for enabling the mobile terminal to have access to a wireless local area network, wherein the exchange of data for providing access to the wireless local area network occurs in a convenient way for the user of the mobile terminal.

The object of the present invention is achieved by a method for enabling a mobile terminal to have access to a wireless local area network according to claim 1.

Thereby, it is advantageously possible according to the present invention that access to the wireless local area network can be granted to the mobile terminal in a convenient manner.

Within the context of the present invention, the term "authentication information" relates to an authentication information such as a username and a password or only a username or only a password, but also relates to an encryption information or an encryption key such as the WPA key or the WPA2 key requested by a protected wireless local area network from any mobile terminal requesting access to the wireless local area network.

Within the context of the present invention, the term "mobile terminal" relates to a device having a WLAN interface (first radio interface), a subscriber identity module (SIM card), and mobile connectivity (by the second radio interface to the public land mobile network). The mobile terminal can be a handset device like a mobile phone, or a computing device like a laptop. The operating system is considered part of the mobile terminal.

Within the context of the present invention, the term "access point" relates, e.g., to a "WLAN layer 2" device, a WLAN enabled router, an integrated access device or similar devices.

The subscriber identity module of the mobile terminal is preferably the subscriber identity module used by the mobile terminal to have access to the public land mobile network. For example, in case that the public land mobile network the mobile terminal is potentially connected to is a mobile terminal according to the Global System of Mobile Communication (GSM) standard, the subscriber identity module is a SIM-card according to the Global System of Mobile Communication (GSM) standard. In case that the public land mobile network the mobile terminal is potentially connected to is a mobile terminal according to the Universal Mobile Telecommunication System (UMTS), the subscriber identity module is an USIM-card according to the Universal Mobile Telecommunication System (UMTS).

According to the present invention, after the reception of the first set of data (related to the authentication information required by the wireless local area network), data are stored in the mobile terminal using the WLAN login client module, wherein these data are hereinafter also called a second set of data. The second set of data (which is stored in a memory device or a memory element of the mobile terminal, preferably a memory device or a memory element within the subscriber identity module or protected by protection methods of the subscriber identity module of the mobile terminal) can be identical to the first set of data but it can also differ from the first set of data (transmitted from the WLAN login server module to the mobile terminal).

According to the present invention, the method comprises the step of the WLAN login client module of the mobile terminal transmitting a request message to the WLAN login server module of the public land mobile network, the request message specifying the wireless local area network allowing the WLAN login server module of the public land mobile network to transmit the first set of data to the WLAN login client module of the mobile terminal.

Thereby, it is advantageously possible to easily and conveniently transfer the first set of data from the public land mobile network to the mobile terminal for a specific wireless local area network requested or recognized by the mobile terminal.

According to still a preferred embodiment of the present invention, the request message of the WLAN login client module is transmitted to the WLAN login server module in an automatic manner after the mobile terminal having recognized the wireless local area network.

Thereby, it is advantageously possible to easily and conveniently transfer the request message from the mobile terminal to the public land mobile network for a specific wireless local area network requested or recognized by the mobile terminal.

Thereby, it is advantageously possible that the method comprises the step of
-- the wireless local area network sending a third set of data to the WLAN login server module of the public land mobile network, the third set of data being related to the authentication information required by the wireless local area network,
   and/or
-- the mobile terminal transmitting a further request message to the wireless local area network in view of triggering the transmission of a third set of data from the wireless local area network to the public land mobile network, the third set of data being stored in the WLAN login server module of the public land mobile network, and the third set of data being related to the authentication information.

Thereby, it is advantageously possible to easily and conveniently transfer data to the public land mobile network that are indicative of the authentication information to be used in connection with a specific wireless local area network, these data transferred to the public land mobile network are hereinafter also called a third set of data.

It is to be understood that the first set of data, the second set of data and the third set of data are not necessarily different. These sets of data can either be
-- identical, or
-- the first set of data be identical to the second set of data (but not to the third set of data),
   or
-- the second set of data be identical to the third set of data (but not to the first set of data),
   or
-- the first set of data be identical to the third set of data (but not to the second set of data).

Advantageously the transmission of the authentication information from the mobile terminal to the wireless local area network is transparent for the wireless local area network.

This means that the wireless local area network as a whole or any component of the wireless local area network (such as an access point of the wireless local area network) does not need to comply with specific requirements in order to be used in connection with the method, the public land mobile network or the mobile terminal of the present invention. Thereby, it is advantageously possible to use any already installed wireless local area network or component of a wireless local area network.

The present invention also relates to a public land mobile network and a mobile terminal for enabling a mobile terminal to have access to a wireless local area network according to claim 3.

According to the present invention,
-- the public land mobile network is configured such that on reception of a request message to the WLAN login server module of the public land mobile network from the WLAN login client module of the mobile terminal, the transmission of the first set of data is provided from the WLAN login server module of the public land mobile network to the WLAN login client module of the mobile terminal, and
-- the public land mobile network is configured to receive a third set of data from the wireless local area network to be stored in the WLAN login server module of the public land mobile network, the third set of data being related to the authentication information required by the wireless local area network.

Advantageously,
-- the mobile terminal is configured such that a request message is genera-ted by the mobile terminal using the WLAN login client module and sent to the public land mobile network in view of the reception of the first set of data by the WLAN login client module of the mobile terminal, and/or
-- the mobile terminal is configured to send a further request message to the wireless local area network in order to trigger the transmission of a third set of data from the wireless local area network to the public land mobile network, the third set of data being stored in the WLAN login server module of the public land mobile network, and the third set of data being related to the authentication information.

The present invention further relates to a program comprising a computer readable program code for controlling a public land mobile network and a mobile terminal according to an inventive method.

The present invention further also relates to a computer program product comprising the program.

### BRIEF DESCRIPTION OF THE DRAWINGS

Figure 1 schematically illustrates a mobile terminal, a public land mobile network and a wireless local area network according to the present invention.
Figures 2 to 4 schematically illustrate transmission diagrams for different embodiments of the method according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

According to the present invention, a method for enabling a mobile terminal to have access to a wireless local area network via a first radio interface of the mobile terminal is disclosed. The inventive method is also called "operator assisted WLAN login". This means that the operator of the public land mobile network (to which the mobile terminal is connected or at least to which the mobile terminal has been connected) is involved in providing to the mobile terminal the necessary credential information obtain access to the wireless local area network, i.e. to an access point of the wireless local area network.

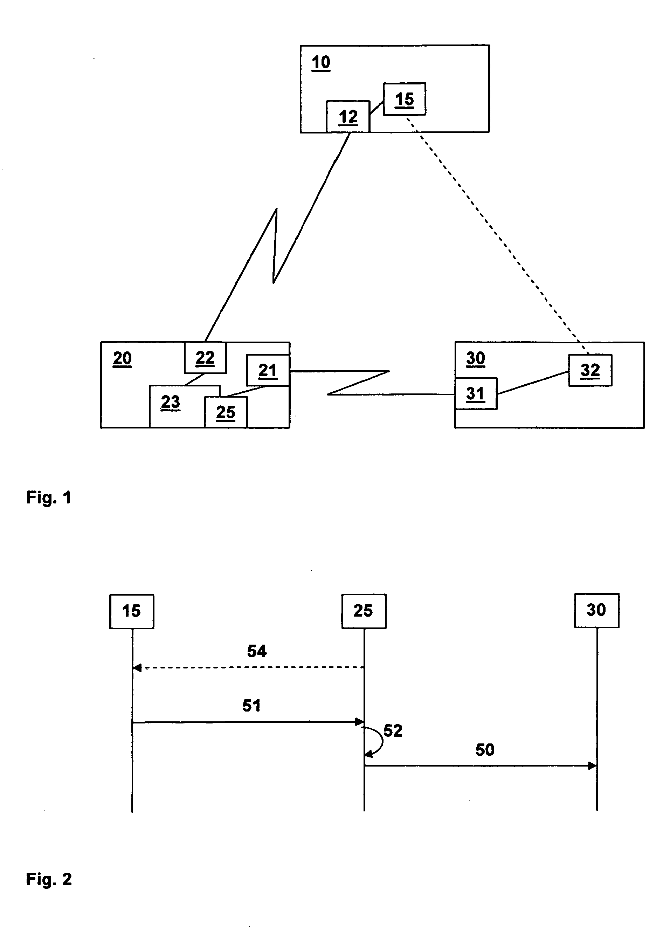

In Figure 1, a mobile terminal 20, a public land mobile network 10 and a wireless local area network 30 are shown. The wireless local area network 30 comprises one or a plurality of access points. Exemplarily, one access point 31 is shown in Figure 1 and designated by means of reference sign 31. The mobile terminal 20 comprises a subscriber identity module 23, and a first radio interface 21 that is able to establish a radio link to the wireless local area network 30 (or to the access point 31 of the wireless local area network 30), according to the WLAN standard or according to one of the WLAN standars (IEEE 802.11x). The public land mobile network 10 comprises a transceiver entity 12 such as a base station, a NodeB, an eNodeB or another transceiver system so that a radio link between the public land mobile network 10 and a second radio interface 22 the mobile terminal 20 can be established according to a mobile communication standard such as GERAN, UTRAN, LTE / E-UTRAN, LTE-Advanced, cdma2000, WiMAX, WiBro etc. The wireless local area network 30 comprises preferably a server 32 of the WLAN infrastructure.

According to the present invention, the mobile terminal 20 comprises a WLAN login client module 25 and the public land mobile network 10 comprises a WLAN login server module 15. The WLAN login client module 25 and the WLAN login server module 15 serve to exchange data that ensure that the mobile terminal is able successfully login to the wireless local area network 30.

In case that the WLAN login client module 25 needs to communicate with the WLAN login server module 15, a mobile connectivity between the mobile terminal 20 and the public land mobile network 10 is required, specifically a mobile connectivity between the subscriber identity module 23 and the infrastructure of the public land mobile network 10. According to the present invention, this connectivity can be implemented, e.g., by means of an SMS communication (Short Message System) or by means of a data channel.

It is preferred that the WLAN login client module 25 is implemented as a SIM card application, either partially or completely. For example, it is possible and preferred according to the present invention that the WLAN login client module 25 can be downloaded to the subscriber identity module 23 of the mobile terminal 20, e.g. via an over-the-air remote device management system available to the operator of the public land mobile network 10.

The operator assisted WLAN login according to the present invention refers to a method where WLAN login client module 25 stores information or data in relation to the information needed to obtain access to the wireless local area network 30 and for using the services of the wireless local area network 30. Such information (needed to obtain access to the wireless local area network 30) is hereinafter also called authentication information and designated by means of reference sign 50. The information stored or memorized in the WLAN login client module 25 corresponding to the authentication information is hereinafter also called second set of data and designated by means of reference sign 52. In order for the WLAN login client module 25 to be able to store the second set of data 52 (preferably in the subscriber identity module 23 of the mobile terminal 20), a first set of data 51 needs to be transferred from the public land mobile network 10 (preferably the WLAN login server module 15 of the public land mobile network 10) to the mobile terminal 20 and to the WLAN login client module 25.

According to the present invention, it is possible and preferred that the second set of data 52 is stored in the WLAN login client module 25 such that a plurality of second sets of data 52 (corresponding to the authentication information 50 of a plurality of different wireless local area networks or access points of wireless local area networks) are stored in the subscriber identity module 23 of the mobile terminal 20. Thereby, it is possible that the mobile terminal 20 discovers or recognizes different wireless local area networks 30 and requests the corresponding pieces of authentication information 50 from the public land mobile network 10, thereby creating database inside the mobile terminal 20 that is self-learning.

The WLAN login client module 25 either continuously scans the radio spectrum for available wireless local area networks (especially via scanning the WLAN SSID information of different networks), or the WLAN login client module 25 is called whenever the mobile terminal 20 detects a WLAN SSID. The WLAN login client module 25 can either be called by the mobile terminal 20 for all WLAN SSIDs detected, or only for WLAN SSIDs detected for the first time by the mobile terminal.

Preferably, the WLAN login client module 25 memorizes or stores the second set of data 52 (or the plurality of second sets of data 52) within the SIM card. Thereby, it is easily possible to transfer the needed authentication information 50 from one device to another device by simply exchanging the SIM card.

Hereinafter, the inventive method is explained with respect to Figure 1 and 2.

Once the WLAN login client module 25 detects a new WLAN SSID it checks whether the WLAN login client module 25 already has the authentication information necessary to access the corresponding wireless local area network 30 or whether it needs additional information.
In case that the WLAN login client module 25 already has the required information to access the wireless local area network 30 (stored in the database of (plurality of) the second set(s) of data inside the subscriber identity module 23 (preferably the SIM card) of the mobile terminal 20), it either configures the first radio interface (WLAN interface) 21 of the mobile terminal 20 directly, or it provides the information to the mobile terminal 20 so that the mobile terminal 20 is able to configure itself. In any case, the mobile terminal 20 is able to connect to the wireless local area network 30 (or access point of the wireless local area network) without any user intervention.
In case that the WLAN login client module 25 detects a new WLAN SSID and does not find the authentication information 50 necessary to access the wireless local area network (or access point of the wireless local area network), it contacts the WLAN login server module 15 via the second radio interface 22 of the mobile terminal 20. This connectivity is provided by the public land mobile network 10, e.g. in the form of an SMS transmission or of a data connection. The operator assisted WLAN login method is executed by the WLAN login client module 25 sending a request message 54 (preferably including the WLAN SSID) to the WLAN login server module 15, and waits for a response. When the WLAN login server module 15 receives a request message 54 (preferably comprising the WLAN SSID information or another information specifying the requested wireless local area network 30), the WLAN login server module 15 checks whether the requested information is present and (in the affirmative case) sends the first set of data 51 to the WLAN login client module 25. The WLAN login client module 25 then either configures the first radio interface (WLAN interface) 21 of the mobile terminal 20 directly, or it provides the information to the mobile terminal 20 so that the mobile terminal 20 is able to configure itself. The mobile terminal 20 is then able to connect to the wireless local area network 30 (or access point of the wireless local area network) without any user intervention.

If the WLAN login server module 15 does not find any information related to the authentication information 50 of the requested wireless local area network 30, it can either report this result to the WLAN login client module 25. Otherwise, it is also possible according to the present invention that the WLAN login server module 15 contacts the operator of the wireless local area network 30 (or the provider of the wireless local area network 30) and request to have the corresponding information transmitted.

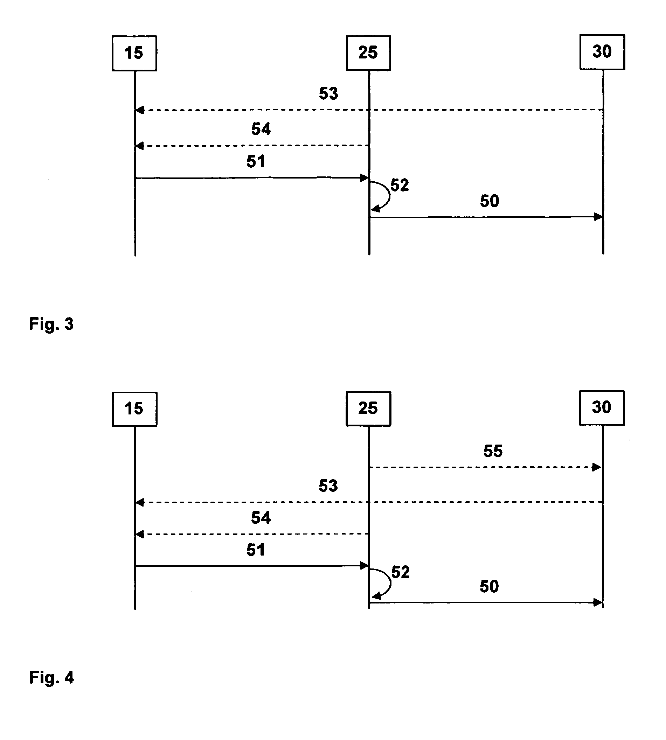

An optional variant is represented in Figure 3: The wireless local area network 30 (or a central entity of the wireless local area network 30) sends a third set of data 53 to the public land mobile network 10, especially to the WLAN login server module 15 in order to assure that the relevant data for granting access to the wireless local area network 30 can be distributed by the WLAN login server module 15 to the requesting mobile terminal(s) 20. The further steps of the inventive method are identical to the description relating to Figure 2.

According to still a further variant represented in Figure 4, the transmission of the third set of data 53 from the wireless local area network 30 (or a central entity of the wireless local area network 30) to the public land mobile network 10 is triggered by a further request message 55 which is sent from the WLAN login client module 25 to the wireless local area network 30, in order to assure that the relevant data for granting access to the wireless local area network 30 can be distributed by the wireless local area network 30 (by means of transmitting the third set of data 53 to the WLAN login server module 15) according to the representation in Figure 3.

The authentication information 50 (and hence the first set of data 51, the second set of data 52 and the third set of data 53) relate preferably to one or a plurality out of:
-- the WLAN SSID,
-- the information whether the wireless local area network 30 corresponding to the WLAN SSID is open or closed,
-- the credentials needed to authenticate the mobile terminal 20, and
-- the encryption keys needed to setup a connection in a closed wireless local area network 30.

## Claims

1. Method for enabling a mobile terminal (20) to have access to a wireless local area network (30) via a first radio interface of the mobile terminal (20), wherein the wireless local area network (30) requires at least one authentication information (50) to grant access to the mobile terminal (20), wherein the mobile terminal (20) comprises a subscriber identity module (23) and a second radio interface (22) to a public land mobile network (10), wherein the public land mobile network (10) comprises a WLAN login server module (15), and wherein the mobile terminal (20) comprises a WLAN login client module (25), wherein the method comprises the step of:
- transmitting a further request message (55) from the mobile terminal (20) to the wireless local area network (30) in view of triggering the transmission of a third set of data (53) from the wireless local area network (30) to the public land mobile network (10), the third set of data (53) being stored in the WLAN login server module (15) of the public land mobile network (10), and the third set of data (53) comprising the authentication information (50),
- transmitting a request message (54) from the WLAN login client module (25) of the mobile terminal (20) to the WLAN login server module (15) of the public land mobile network (20), the request message (54) specifying the wireless local area network (30) allowing the WLAN login server module (15) of the public land mobile network (10) to transmit a first set of data (51) to the WLAN login client module (25) of the mobile terminal (20),
- transmitting the first set of data (51) from the WLAN login server module (15) of the public land mobile network (10) to the mobile terminal (20), the first set of data (51) comprising the authentication information (50) required by the wireless local area network (30),
- storing a second set of data (52) comprising the authentication information (50) required by the wireless local area network (30) within the subscriber identity module (23) of the mobile terminal (20) using the WLAN login client module (25),
- in case access to the wireless local area network (30) is requested by the mobile terminal (20), transmitting the authentication information (50) from the mobile terminal (20) to the wireless local area network (30) using the WLAN login client module (25).

2. Method according to claim 1, wherein the request message (54) of the WLAN login client module (25) is transmitted to the WLAN login server module (15) in an automatic manner after the mobile terminal (20) having recognized the wireless local area network (30).

3. Public land mobile network (10) and a mobile terminal (20) for enabling the mobile terminal (20) to have access to a wireless local area network (30) via a first radio interface of the mobile terminal (20), wherein the wireless local area network (30) requires at least one authentication information (50) to grant access to the mobile terminal (20), wherein the mobile terminal (20) comprises a subscriber identity module (23) and a second radio interface (22) to the public land mobile network (10), wherein the public land mobile network (10) comprises a WLAN login server module (15), and wherein the mobile terminal (20) comprises a WLAN login client module (25), wherein the public land mobile network (10) is configured such that
- a third set of data (53) is received from the wireless local area network (30) to be stored in the WLAN login server module (15) of the public land mobile network (10), the third set of data (53) comprising the authentication information (50) required by the wireless local area network (30),
- on reception of a request message (54) from the WLAN login client module (25) of the mobile terminal (20) to the WLAN login server module (15) of the public land mobile network (20), the transmission of a first set of data (51) is provided from the WLAN login server module (15) of the public land mobile network (10) to the WLAN login client module (25) of the mobile terminal (20),
- the first set of data (51) from the WLAN login server module (15) of the public land mobile network (10) is transmitted to the mobile terminal (20), the first set of data (51) comprising the authentication information (50) required by the wireless local area network (30),
wherein the mobile terminal is configured such that a second set of data (52) comprising the authentication information (50) is stored within the subscriber identity module (23) of the mobile terminal (20) using the WLAN login client module (25), and wherein the authentication information (50) is transmitted from the mobile terminal (20) to the wireless local area network (30) using the WLAN login client module (25) in case that access to the wireless local area network (30) is requested by the mobile terminal (20).

4. Program comprising a computer readable program code which, when executed by processors of a public land mobile network (10) and a mobile terminal (20), perform a method according to any of claims 1 or 2.

5. Computer program product for enabling a mobile terminal (20) to have access to a wireless local area network (30), comprising a program according to claim 4.

## Patentansprüche

1. Verfahren, mit dem einem mobilen Endgerät (20) über eine erste Funkschnittstelle des mobilen Endgeräts (20) Zugriff auf ein drahtloses lokales Netz (30) gewährt wird, wobei das drahtlose lokale Netz (30) mindestens eine Authentifizierungsinformation (50) benötigt, um dem mobilen Endgerät (20) Zugriff zu gewähren, wobei das mobile Endgerät (20) ein Teilnehmeridentitätsmodul (23) und eine zweite Funkschnittstelle (22) mit einem öffentlichen landgestützten Mobilfunknetz (10) umfasst, wobei das öffentliche landgestützte Mobilfunknetz (10) ein WLAN-Login-Servermodul (15) umfasst, und wobei das mobile Endgerät (20) ein WLAN-Login-Clientmodul (25) umfasst, wobei das Verfahren die folgenden Schritte umfasst:
- Senden einer weiteren Anfragenachricht (55) vom mobilen Endgerät (20) an das drahtlose lokale Netz (30) im Hinblick auf das Auslösen des Versendens eines dritten Datensatzes (53) vom drahtlosen lokalen Netz (30) an das öffentliche landgestützte Mobilfunknetz (10), wobei der dritte Datensatz (53) im WLAN-Login-Servermodul (15) des öffentlichen landgestützten Mobilfunknetzes (10) gespeichert wird und der dritte Datensatz (53) die Authentifizierungsinformation (50) enthält,
- Senden einer Anforderungsnachricht (54) vom WLAN-Login-Clientmodul (25) des mobilen Endgeräts (20) an das WLAN-Login-Servermodul (15) des öffentlichen landgestützten Mobilfunknetzes (20), wobei die Anforderungsnachricht (54) das drahtlose lokale Netz (30) angibt, das dem WLAN-Login-Servermodul (15) des öffentlichen landgestützten Mobilfunknetzes (10) gestattet, einen ersten Datensatz (51) an das WLAN-Login-Clientmodul (25) des mobilen Endgeräts (20) zu senden,
- Senden des ersten Datensatzes (51) vom WLAN-Login-Servermodul (15) des öffentlichen landgestützten Mobilfunknetzes (10) an das mobile Endgerät (20), wobei der erste Datensatz (51) die Authentifizierungsinformation (50) umfasst, die vom drahtlosen lokalen Netz (30) benötigt wird,
- Speichern eines zweiten Datensatzes (52), der die Authentifizierungsinformation (50) umfasst, die vom drahtlosen lokalen Netz (30) benötigt wird, im Teilnehmeridentitätsmodul (23) des mobilen Endgeräts (20) unter Verwendung des WLAN-Login-Clientmoduls (25),
- Senden der Authentifizierungsinformation (50) vom mobilen Endgerät (20) zum drahtlosen lokalen Netz (30) unter Verwendung des WLAN-Login-Clientmoduls (25), falls vom mobilen Endgerät (20) Zugriff auf das drahtlose lokale Netz (30) verlangt wird.

2. Verfahren nach Anspruch 1, wobei die Anfragenachricht (54) des WLAN-Login-Clientmoduls (25) auf automatische Weise an das WLAN-Login-Servermodul (15) gesendet wird, nachdem das mobile Endgerät (20) das drahtlose lokale Netz (30) erkannt hat.

3. Öffentliches landgestütztes Mobilfunknetz (10) und mobiles Endgerät (20), mit denen dem mobilen Endgerät (20) über eine erste Funkschnittstelle des mobilen Endgeräts (20) Zugriff auf ein drahtloses lokales Netz (30) gewährt wird, wobei das drahtlose lokale Netz (30) mindestens eine Authentifizierungsinformation (50) benötigt, um dem mobilen Endgerät (20) Zugriff zu gewähren, wobei das mobile Endgerät (20) ein Teilnehmeridentitätsmodul (23) und eine zweite Funkschnittstelle (22) mit dem öffentlichen landgestützten Mobilfunknetz (10) umfasst, wobei das öffentliche landgestützte Mobilfunknetz (10) ein WLAN-Login-Servermodul (15) umfasst, und wobei das mobile Endgerät (20) ein WLAN-Login-Clientmodul (25) umfasst, wobei das öffentliche landgestützte Mobilfunknetz (10) so gestaltet ist, dass
- ein dritter Datensatz (53) vom drahtlosen lokalen Netz (30) empfangen wird, der im WLAN-Login-Servermodul (15) des öffentlichen landgestützten Mobilfunknetzes (10) zu speichern ist, wobei der dritte Datensatz (53) die Authentifizierungsinformation (50) umfasst, die vom drahtlosen lokalen Netz (30) benötigt wird,
- vom WLAN-Login-Servermodul (15) des öffentlichen landgestützten Mobilfunknetzes (10) dafür gesorgt wird, dass bei Empfang einer Anforderungsnachricht (54) vom WLAN-Login-Clientmodul (25) des mobilen Endgeräts (20) an das WLAN-Login-Servermodul (15) des öffentlichen landgestützten Mobilfunknetzes (20) ein erster Datensatz (51) an das WLAN-Login-Clientmodul (25) des mobilen Endgeräts (20) gesendet wird,
- wobei der erste Datensatz (51) vom WLAN-Login-Servermodul (15) des öffentlichen landgestützten Mobilfunknetzes (10) an das mobile Endgerät (20) gesendet wird, wobei der erste Datensatz (51) die Authentifizierungsinformation (50) umfasst, die vom drahtlosen lokalen Netz (30) benötigt wird,
wobei das mobile Endgerät so gestaltet ist, dass ein zweiter Datensatz (52), der die Authentifizierungsinformation (50) umfasst, unter Verwendung des WLAN-Login-Clientmoduls (25) im Teilnehmeridentitätsmodul (23) des mobilen Endgeräts (20) gespeichert wird, und wobei die Authentifizierungsinformationen (50) unter Verwendung des WLAN-Login-Clientmoduls (25) vom mobilen Endgerät (20) an das drahtlose lokale Netz (30) gesendet wird, falls vom mobilen Endgerät (20) Zugriff auf das drahtlose lokale Netz (30) verlangt wird.

4. Programm, einen computerlesbaren Programmcode umfassend, der, wenn er von Prozessoren eines öffentlichen landgestützten Mobilfunknetzes (10) und eines mobilen Endgeräts (20) ausgeführt wird, ein Verfahren nach einem der Ansprüche 1 oder 2 durchführt.

5. Computerprogrammprodukt, mit dem einem mobilen Endgerät (20) Zugriff auf ein drahtloses lokales Netz (30) gewährt wird, ein Programm nach Anspruch 4 umfassend.

## Revendications

1. Un procédé destiné à permettre à un terminal mobile (20) d'avoir accès à un réseau local sans fil (30) par l'intermédiaire d'une première interface radio du terminal mobile (20), où le réseau local sans fil (30) exige au moins une information d'authentification (50) pour accorder un accès au terminal mobile (20), où le terminal mobile (20) comprend un module d'identité d'abonné (23) et une deuxième interface radio (22) vers un réseau mobile terrestre public (10), où le réseau mobile terrestre public (10) comprend un module serveur de connexion à un réseau WLAN (15), et où le terminal mobile (20) comprend un module client de connexion à un réseau WLAN (25), où le procédé comprend l'opération suivante :
- la transmission d'un message de demande complémentaire (55) du terminal mobile (20) au réseau local sans fil (30) dans le but de déclencher la transmission d'un troisième ensemble de données (53) du réseau local sans fil (30) au réseau mobile terrestre public (10), le troisième ensemble de données (53) étant conservé en mémoire dans le module serveur de connexion à un réseau WLAN (15) du réseau mobile terrestre public (10), et le troisième ensemble de données (53) contenant l'information d'authentification (50),
- la transmission d'un message de demande (54) du module client de connexion à un réseau WLAN (25) du terminal mobile (20) au module serveur de connexion à un réseau WLAN (15) du réseau mobile terrestre public (20), le message de demande (54) spécifiant que le réseau local sans fil (30) autorise le module serveur de connexion à un réseau WLAN (15) du réseau mobile terrestre public (10) à transmettre un premier ensemble de données (51) au module client de connexion à un réseau WLAN (25) du terminal mobile (20),
- la transmission du premier ensemble de données (51) du module serveur de connexion à un réseau WLAN (15) du réseau mobile terrestre public (10) au terminal mobile (20), le premier ensemble de données (51) contenant l'information d'authentification (50) exigée par le réseau local sans fil (30),
- la conservation en mémoire d'un deuxième ensemble de données (52) contenant l'information d'authentification (50) exigée par le réseau local sans fil (30) à l'intérieur du module d'identité d'abonné (23) du terminal mobile (20) au moyen du module client de connexion à un réseau WLAN (25),
- dans le cas où un accès au réseau local sans fil (30) est demandé par le terminal mobile (20), la transmission de l'information d'authentification (50) du terminal mobile (20) au réseau local sans fil (30) au moyen du module client de connexion à un réseau WLAN (25).

2. Le procédé selon la Revendication 1, où le message de demande (54) du module client de connexion à un réseau WLAN (25) est transmis au module serveur de connexion à un réseau WLAN (15) de manière automatique après que le terminal mobile (20) ait reconnu le réseau local sans fil (30).

3. Un réseau mobile terrestre public (10) et un terminal mobile (20) destinés à permettre au terminal mobile (20) d'avoir accès à un réseau local sans fil (30) par l'intermédiaire d'une première interface radio du terminal mobile (20), où le réseau local sans fil (30) exige au moins une information d'authentification (50) pour accorder un accès au terminal mobile (20), où le terminal mobile (20) comprend un module d'identité d'abonné (23) et une deuxième interface radio (22) vers le réseau mobile terrestre public (10), où le réseau mobile terrestre public (10) comprend un module serveur de connexion à un réseau WLAN (15), et où le terminal mobile (20) comprend un module client de connexion à un réseau WLAN (25), où le réseau mobile terrestre public (10) est configuré de sorte que
- un troisième ensemble de données (53) soit reçu du réseau local sans fil (30) destiné à être conservé en mémoire dans le module serveur de connexion à un réseau WLAN (15) du réseau mobile terrestre public (10), le troisième ensemble de données (53) contenant l'information d'authentification (50) exigée par le réseau local sans fil (30),
- à réception d'un message de demande (54) du module client de connexion à un réseau WLAN (25) du terminal mobile (20) au module serveur de connexion à un réseau WLAN (15) du réseau mobile terrestre public (20), la transmission d'un premier ensemble de données (51) est effectuée du module serveur de connexion à un réseau WLAN (15) du réseau mobile terrestre public (10) au module client de connexion à un réseau WLAN (25) du terminal mobile (20),
- le premier ensemble de données (51) provenant de du module serveur de connexion à un réseau WLAN (15) du réseau mobile terrestre public (10) est transmis au terminal mobile (20), le premier ensemble de données (51) contenant l'information d'authentification (50) exigée par le réseau local sans fil (30),
où le terminal mobile est configuré de sorte qu'un deuxième ensemble de données (52) contenant l'information d'authentification (50) soit conservé en mémoire à l'intérieur du module d'identité d'abonné (23) du terminal mobile (20) au moyen du module client de connexion à un réseau WLAN (25), et où l'information d'authentification (50) est transmise du terminal mobile (20) au réseau local sans fil (30) au moyen du module client de connexion à un réseau WLAN (25) dans le cas où un accès au réseau local sans fil (30) est demandé par le terminal mobile (20).

4. Un programme contenant du code de programme lisible par ordinateur qui, lorsqu'il est exécuté par des processeurs d'un réseau mobile terrestre public (10) et d'un terminal mobile (20), exécute un procédé selon l'une quelconque des Revendications 1 ou 2.

5. Un produit de programme informatique destiné à permettre à un terminal mobile (20) d'avoir accès à un réseau local sans fil (30) contenant un programme selon la Revendication 4.
